# EUROPEAN PATENT APPLICATION

(11) **EP 4 257 416 A1**
(43) Date of publication of application: **11.10.2023**
(21) Application number: 23153973.5
(22) Date of filing: 30.01.2023
(51) Int. Cl.: B60L 53/16, H01R 13/66

(54) **CHARGING SYSTEM**

(30) Priority: 05.04.2022 JP 2022063076
(71) Applicant: TOYOTA JIDOSHA KABUSHIKI KAISHA, Aichi-Ken 471-8571 (JP)
(72) Inventor: TSUKAMOTO, Shota, Aichi-ken, 471-8571 (JP)
(74) Representative: D Young & Co LLP

(57) **Abstract**

A charging system fits a charging connector (33) of a charging device (3) to a charging inlet (25) of a vehicle (2) to charge a battery (21) installed in the vehicle (2). The charging system includes a temperature detecting unit configured to detect a temperature of the charging inlet (25), a usage-start-time acquisition unit (24) acquires a usage start time at which a user starts using the vehicle (2), and a control unit (31), when charging the battery, executes control, based on a detection result of the temperature detecting unit (23), to perform charging by applying, at a point in time that is immediately prior to the usage start time, a current that is greater than a current applied earlier than the point in time, when the temperature of the charging inlet (25) is lower than a threshold value temperature that is set in advance.

## Description

### BACKGROUND OF THE INVENTION

### 1. Field of the Invention

The invention relates to a charging system.

### 2. Description of Related Art

Japanese Unexamined Patent Application Publication No. 2011-167003 (JP 2011-167003 A) discloses technology in which a heating mechanism is added to a charging connector of a charging device, and when the charging connector connected to a charging inlet of a vehicle freezes at low temperatures and becomes lodged fast therein, freezing of the charging connector is suppressed by supplying electric power to the heating mechanism.

### SUMMARY OF THE INVENTION

However, the technology disclosed in JP 2011-167003 A requires a separate heating mechanism to heat the charging connector, leading to higher costs.

The invention provides a charging system that can suppress the charging connector from becoming undetachable from the charging inlet due to freezing, while suppressing cost increases.

A first aspect of the invention is a charging system. The charging system is configured to fit a charging connector of a charging device to a charging inlet of a vehicle to charge a battery installed in the vehicle. The charging system includes a temperature detecting unit, a usage-start-time acquisition unit, and a control unit. The temperature detecting unit is configured to detect a temperature of the charging inlet. The usage-start-time acquisition unit is configured to acquire a usage start time at which a user starts using the vehicle. The control unit is configured to, when fitting the charging inlet and the charging connector to charge the battery, execute control, based on a detection result of the temperature detecting unit, to perform charging by applying, at a point in time that is immediately prior to the usage start time, a current that is greater than a current applied earlier than the point in time, when the temperature of the charging inlet is lower than a threshold value temperature that is set in advance.

According to the above configuration, the amount of heat generated by conduction resistance in the charging inlet and the charging connector at low temperatures can be increased in order to avert freezing of the fitting portion between the charging inlet and the charging connector, and accordingly a situation in which the charging connector cannot be detached from the charging inlet due to freezing can be suppressed, while suppressing cost increases due to adding a separate heating mechanism to the charging connector.

In the above charging system, the control unit may increase the current of charging, from start of charging, such that the current is greater a closer to the usage start time, when the temperature of the charging inlet is lower than the threshold value temperature set in advance.

According to the above configuration, freezing of the charging inlet and the charging connector can be averted by the usage start time.

A second aspect of the invention is a charging system. The charging system includes a control unit that is configured to fit a charging connector of a charging device to a charging inlet of a vehicle, to charge a battery installed in the vehicle. The control unit starts detaching the charging connector from the charging inlet after charging of the battery is complete. When the charging connector cannot be detached from the charging inlet, the control unit executes control of repeatedly performing discharging in which current flows from the charging inlet side to the charging connector side and charging in which current flows from the charging connector side to the charging inlet side, alternatingly.

According to the above configuration, the amount of heat generated by conduction resistance in the charging inlet and the charging connector can be increased by repeatedly performing charging and discharging alternatingly, to avert freezing of the fitting portion between the charging inlet and the charging connector, and accordingly a situation in which the charging connector cannot be detached from the charging inlet due to freezing can be suppressed, while suppressing cost increases due to adding a separate heating mechanism to the charging connector.

In the charging system according to an aspect of the invention, a part of the charging connector may be made of a high thermal conductivity material.

According to the above configuration, a great amount of heat generated by conduction resistance can be easily transferred to the fitting portion between the charging inlet and the charging connector.

In the charging system according to an aspect of the invention, the charging device may include an arm mechanism that holds the charging connector, and automatically inserts and removes the charging connector to and from the charging inlet.

According to the above configuration, the charging connector can be automatically detached from the charging inlet, while averting freezing of the fitting portion between the charging inlet and the charging connector, even at low temperatures.

In the charging system according to aspects of the invention, the amount of heat generated by conduction resistance in the charging inlet and the charging connector at low temperatures can be increased to avert freezing of the fitting portion between the charging inlet and the charging connector, and accordingly advantageous effects can be obtained in that a situation in which the charging connector cannot be detached from the charging inlet due to freezing can be suppressed, while suppressing cost increases due to adding a separate heating mechanism to the charging connector.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram illustrating a configuration of a charging system according to an embodiment;
FIG. 2 is a flowchart showing an example of a flow of charging control processing executed by a charging control unit;
FIG. 3 is a diagram showing an example of a low-temperature charging profile;
FIG. 4 is a diagram showing an example of an ordinary-temperature charging profile;
FIG. 5 is a flowchart showing another example of the flow of charging control processing executed by the charging control unit; and
FIG. 6 is an explanatory diagram regarding freezing-averting charging and discharging.

### DETAILED DESCRIPTION OF EMBODIMENTS

The following is a description of an embodiment of a charging system according to the invention. Note that the invention is not limited by the present embodiment.

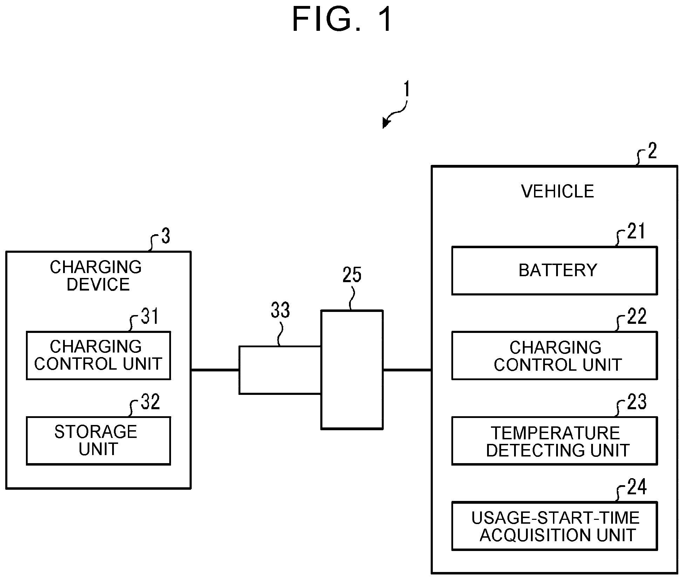

FIG. 1 is a block diagram illustrating a configuration of a charging system 1 according to the embodiment. As illustrated in FIG. 1, the charging system 1 according to the embodiment is a system in which a charging connector 33 of a charging device 3, installed outside of a vehicle 2 such as a battery electric vehicle, is connected to a charging inlet 25 of the vehicle 2, to charge a battery 21 installed in the vehicle 2.

In this charging system 1, the vehicle 2 side includes the battery 21, a charging control unit 22, a temperature detecting unit 23, a usage-start-time acquisition unit 24, and the charging inlet 25. However, depending on the type of vehicle 2, there are cases in which the temperature detecting unit 23 and the usage-start-time acquisition unit 24 are not provided.

The battery 21 is a battery that is made up of a nickel metal hydride battery or a lithium-ion battery, for example, and that stores high-voltage direct current electric power to drive the vehicle 2.

The charging control unit 22 is made up of electronic circuits, principally a known microcomputer that includes a central processing unit (CPU), random access memory (RAM), read-only memory (ROM), an input/output interface, and so forth. The charging control unit 22 collaborates with a charging control unit 31 provided on the charging device 3 side, to control charging processing for charging the battery 21 using the charging device 3. The charging control unit 22 also acquires information relating to a state of charge (SOC) of the battery 21, via an in-vehicle network such as a Controller Area Network (CAN) or the like.

The temperature detecting unit 23 is made up of a temperature sensor installed in the charging inlet 25. The temperature detecting unit 23 detects temperature T of the charging inlet 25, and outputs an electrical signal indicating the detected temperature T of the charging inlet 25 to the charging control unit 22.

The usage-start-time acquisition unit 24 acquires usage start time at which a user will start to use the vehicle 2. For example, the usage-start-time acquisition unit 24 acquires the usage start time entered by the user using a communication terminal owned by the user, an input device installed in the vehicle 2, or the like, by communication thereof with the communication terminal, the input device, and so forth.

The charging inlet 25 is made up of a conducting terminal in a housing in which is formed a hole through which the charging connector 33 of the charging device 3 is inserted.

On the other hand, the charging device 3 side includes the charging control unit 31, a storage unit 32, and the charging connector 33.

The charging control unit 31 is made up of electronic circuits, principally a microcomputer similar to that of the charging control unit 22. The charging control unit 31 collaborates with the charging control unit 22 on the vehicle 2 side to control the charging processing of charging the battery 21 via the charging connector 33 and the charging inlet 25. The charging control unit 31 also communicates with the charging control unit 22 to obtain various types of information such as, for example, the temperature T of the charging inlet 25 detected by the temperature detecting unit 23, the usage start time acquired by the usage-start-time acquisition unit 24, information regarding the SOC of the battery 21, and so forth.

When the charging connector 33 and the charging inlet 25 are fit to each other and electrically connected, the charging control unit 31 acquires a fitting signal indicating the fitted state from the charging control unit 22 of the vehicle 2 via the charging inlet 25 and the charging connector 33, and thus determines the charging connector 33 and the charging inlet 25 to be in a fit state. At this time, when sensing, for example, that the fitting between the charging connector 33 and the charging inlet 25 has started at the point in time when the fitting signal is first acquired, and thereafter, that acquisition of the fitting signal continues for a predetermined amount of time, the charging control unit 31 senses that the fitting between the charging connector 33 and the charging inlet 25 is complete. On the other hand, when the fitting signal is no longer acquired, the charging control unit 31 determines that the charging connector 33 is detached from the charging inlet 25, and that the fit state between the charging connector 33 and the charging inlet 25 has been dissolved (detached state). At this time, when sensing, for example, that detaching of the charging connector 33 from the charging inlet 25 is started at the point in time when the fitting signal is first no longer acquired, and thereafter, when non-acquisition of the fitting signal continues for a predetermined amount of time, the charging control unit 31 senses that the detaching of the charging connector 33 from the charging inlet 25 is complete. Note that the respective methods of determining whether the charging connector 33 and the charging inlet 25 are in a fitted state, the method of sensing that fitting has started, that fitting is complete, that detaching has started, and that detaching is complete, and so forth, are not limited in particular, and known technology can be employed.

The storage unit 32 stores information used in implementing charging control by the charging control unit 31, such as an ordinary-temperature charging profile and a low-temperature charging profile, for example.

The charging connector 33 is made up of a conducting terminal that is electrically connected to the conducting terminal of the charging inlet 25 when inserted into the charging inlet 25 of the vehicle 2, and a holding unit that holds the conducting terminal. The holding unit of the charging connector 33 is made of a high thermal conductivity material, such as a resin material that has relatively high thermal conductivity.

In the charging system 1 having this configuration, the charging control unit 31 on the charging device 3 side executes the charging control processing described below to charge the battery 21, while averting freezing of the charging connector 33. The following is a description of operations of the charging control unit 31 when executing the charging control processing.

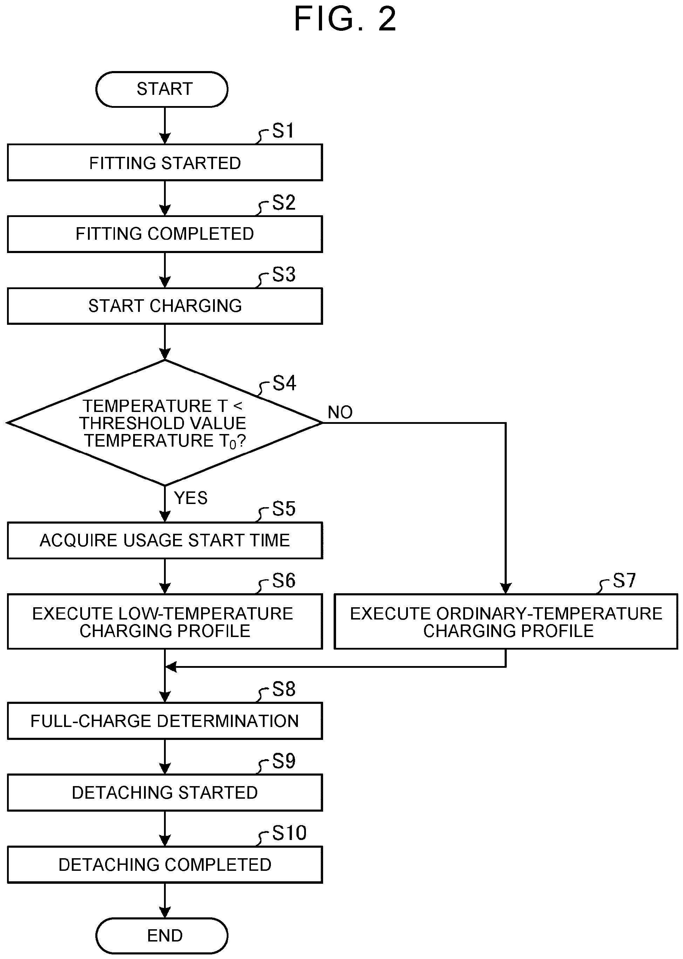

FIG. 2 is a flowchart showing an example of a flow of the charging control processing implemented by the charging control unit 31. First, the charging control unit 31 senses that fitting of the charging connector 33 of the charging device 3 and the charging inlet 25 of the vehicle 2 has started (step S1). Next, the charging control unit 31 senses that fitting of the charging connector 33 of the charging device 3 and the charging inlet 25 of the vehicle 2 is complete (step S2). Next, the charging control unit 31 starts charging (step S3). Next, the charging control unit 31 judges whether the temperature T of the charging inlet 25 detected by the temperature detecting unit 23 is lower than a threshold value temperature T₀ set in advance (step S4). Note that the threshold value temperature T₀ is defined as a low temperature, such that freezing of the charging connector 33 and the charging inlet 25 may occur below this threshold value temperature T₀.

When judging that the temperature T of the charging inlet 25 is lower than the threshold value temperature T₀ (Yes in step S4), the charging control unit 31 acquires the usage start time at which the user will start to use the vehicle 2, from the usage-start-time acquisition unit 24 (step S5). Note that here, the usage start time at which the user will start to use the vehicle 2 is defined as a departure time at which the user enters the vehicle 2 and departs. Next, the charging control unit 31 executes charging using the low-temperature charging profile stored in the storage unit 32 (step S6).

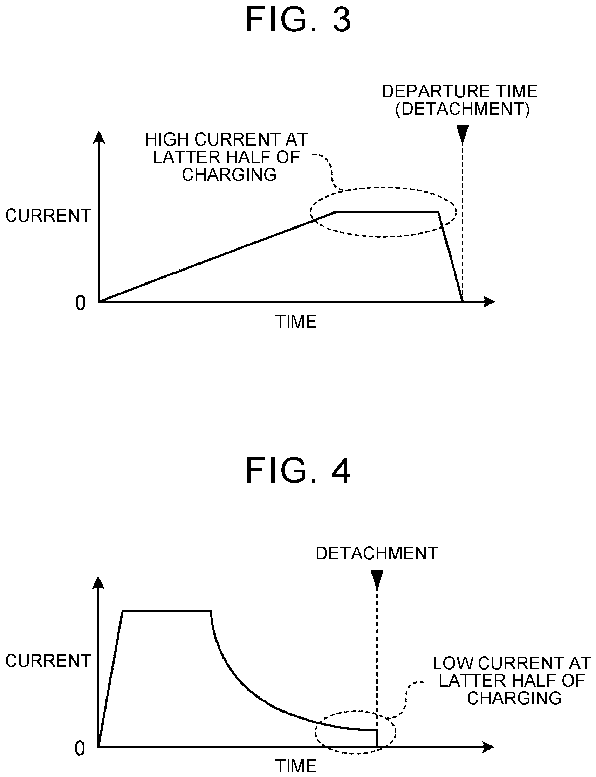

FIG. 3 is a diagram showing an example of the low-temperature charging profile. In charging using the low-temperature charging profile, the battery 21 is charged by applying a current so that the battery 21 is fully charged by the acquired departure time (usage start time). At this time, as shown in FIG. 3, from the start of charging, the charging control unit 31 gradually increases the current the closer to the departure time (usage start time), and in the latter half of the charging, immediately prior to the departure time (usage start time), increases the current to a greater current than that so far, and performs charging by applying the greatest current (high current) set in the low-temperature charging profile. After the charging control unit 31 executes charging using the low-temperature charging profile, the flow transitions to the processing in step S8.

On the other hand, when the charging control unit 31 judges in the processing in step S4 that the temperature T of the charging inlet 25 is no lower than the threshold value temperature T₀ (No in step S4), charging is executed using the ordinary-temperature charging profile (step S7).

FIG. 4 is a diagram showing an example of the ordinary-temperature charging profile. In charging using the ordinary-temperature charging profile, the battery 21 is charged by applying current so that the battery 21 is fully charged at an earliest possible time from the start of charging. At this time, as shown in FIG. 4, the charging control unit 31 applies the greatest current (high current) set in the ordinary-temperature charging profile from the time of the start of charging, and as the battery 21 approaches a full charge, the current is gradually reduced, and in the latter half of the charge, a low current is applied to charge the battery. After the charging control unit 31 executes charging using the ordinary-temperature charging profile, the flow then transitions to the processing in step S8.

The charging control unit 31 executes charging using the low-temperature charging profile or the ordinary-temperature charging profile, and based on information regarding the SOC of the battery 21, determines that the battery 21 is fully charged (step S8). Next, the charging control unit 31 senses that detaching of the charging connector 33 of the charging device 3 from the charging inlet 25 of the vehicle 2 has started (step S9). Next, the charging control unit 31 senses that detaching of the charging connector 33 of the charging device 3 from the charging inlet 25 of the vehicle 2 is complete (step S10). The charging control unit 31 then ends the charging control processing according to one example.

In the charging system 1 according to the embodiment, at the time of the start of charging, the temperature T of the charging inlet 25 is detected by the temperature detecting unit 23 installed in the vehicle 2, the detected temperature T is compared with the threshold value temperature T₀ to judge whether the fitting portion between the charging inlet 25 and the charging connector 33 may possibly freeze, and when the temperature T is lower than the threshold value temperature T₀, the usage start time at which the user will start using the vehicle 2, such as the departure time, is acquired, and thereafter charging is executed using the low-temperature charging profile. In charging using this low-temperature charging profile, conduction of a high current is performed immediately prior to the usage start time (departure time), and accordingly the amount of heat generated at the charging inlet 25 and the charging connector 33 due to conduction resistance can be increased as compared to when conduction of a low current is performed in the latter half of charging, such as in charging using the ordinary-temperature charging profile. In particular, in the charging system 1 according to the embodiment, a part (the holding unit) of the charging connector 33 is made of a high thermal conductivity material, and accordingly, a great amount of heat generated by the conduction resistance can be easily transferred to the fitting portion between the charging inlet 25 and the charging connector 33.

Accordingly, in the charging system 1 according to the embodiment, the amount of heat generated by conduction resistance at the charging inlet 25 and the charging connector 33 can be increased without adding a heating mechanism to the charging connector 33, thereby heating the fitting portion between the charging inlet 25 and the charging connector 33 by the usage start time (departure time) even at low temperatures, and averting freezing. Thus, in the charging system 1 according to the embodiment, the charging connector 33 can be suppressed from becoming undetachable from the charging inlet 25 due to freezing, while suppressing cost increases.

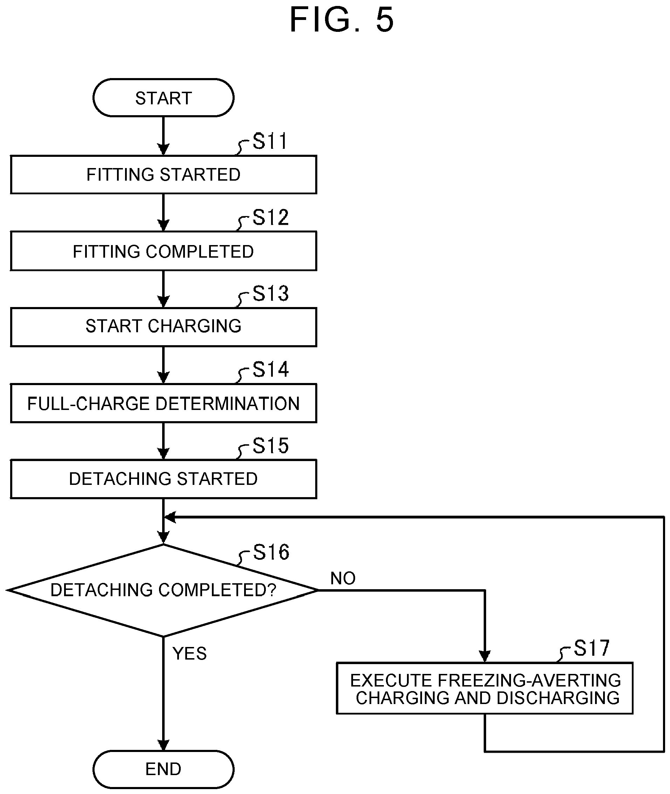

FIG. 5 is a flowchart showing another example of the flow of charging control processing implemented by the charging control unit 31. First, the charging control unit 31 senses that fitting of the charging connector 33 of the charging device 3 and the charging inlet 25 of the vehicle 2 has started (step S11). Next, the charging control unit 31 senses that fitting of the charging connector 33 of the charging device 3 and the charging inlet 25 of the vehicle 2 is complete (step S12). Next, the charging control unit 31 starts charging (step S13). The charging control unit 31 determines, based on information regarding the SOC of the battery 21, that the battery 21 is fully charged (step S14). Next, the charging control unit 31 senses that detaching of the charging connector 33 of the charging device 3 from the charging inlet 25 of the vehicle 2 has started (step S15). Next, the charging control unit 31 judges whether detaching of the charging connector 33 of the charging device 3 from the charging inlet 25 of the vehicle 2 is complete (step S16). When the charging control unit 31 judges that detaching of the charging connector 33 from the charging inlet 25 is complete (Yes in step S16), the series of charging control processing ends. On the other hand, when judging that detaching of the charging connector 33 from the charging inlet 25 is not complete (No in step S16), the charging control unit 31 executes freezing-averting charging and discharging, assuming that the charging connector 33 and the charging inlet 25 are frozen (step S17).

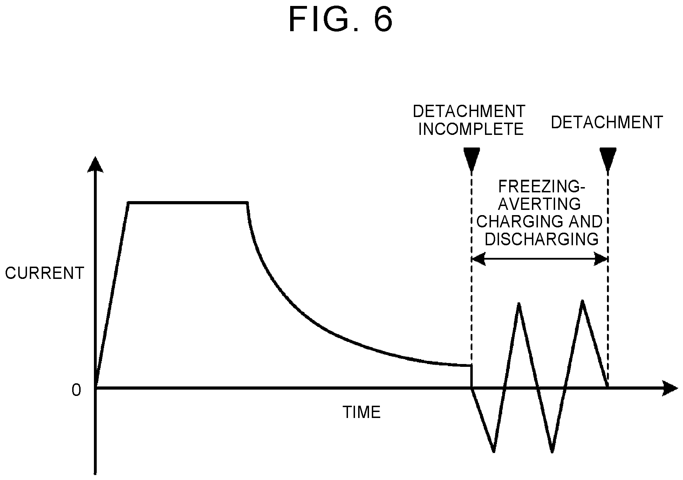

This freezing-averting charging and discharging is performed by the charging control unit 31 following judging that detaching of the charging connector 33 from the charging inlet 25 is not complete (detachment incomplete). As shown in FIG. 6, discharging in which current flows from the charging inlet 25 side to the charging connector 33 side (from the battery 21 side in the vehicle 2 to the charging device 3 side), and charging in which current flows from the charging connector 33 side to the charging inlet 25 side (from the charging device 3 side to the battery 21 side in the vehicle 2) are repeated alternately so that the electric power balance is matched, thereby averting freezing of the fitting portion between the charging inlet 25 and the charging connector 33 due to heat generated by the conduction resistance at the charging inlet 25 and the charging connector 33, while maintaining the SOC of the battery 21 within a predetermined range.

Thereafter, after executing freezing-averting charging and discharging for a certain amount of time, the flow transitions to step S16, and freezing-averting charging and discharging is repeatedly executed until detaching of the charging connector 33 from the charging inlet 25 is judged to be complete. Upon the charging control unit 31 judging that detaching of the charging connector 33 from the charging inlet 25 is complete (Yes in step S16), the series of charging and discharging control processing ends.

In the charging system 1 according to the embodiment, when the charging connector 33 cannot be detached from the charging inlet 25 at the time of the end of charging, the charging connector 33 and the charging inlet 25 are judged to be frozen, and conduction between the charging inlet 25 and the charging connector 33 is performed, implementing charging and discharging such that the electric power balance is matched. Accordingly, in the charging system 1 according to the embodiment, the amount of heat generated by conduction resistance at the charging inlet 25 and the charging connector 33 can be increased even at low temperatures without separately adding a heating mechanism to the charging connector 33, thereby averting freezing of the fitting portion between the charging inlet 25 and the charging connector 33, so that the charging connector 33 can be detached from the charging inlet 25.

Note that the charging system 1 according to the embodiment is not limited to an arrangement in which the user manually inserts and removes (fits and detaches) the charging connector 33 of the charging device 3 to and from the charging inlet 25 of the vehicle 2. For example, an automatic charging device may be employed in which an arm mechanism is provided to the charging device 3, which holds the charging connector 33 and automatically inserts and removes (fits and detaches) the charging connector 33 to and from the charging inlet 25, thus enabling automatic charging to be performed. Thus, when charging the battery 21 of the vehicle 2 by the automatic charging device, the amount of heat generated by conduction resistance at the charging inlet 25 and the charging connector 33 can be increased, thereby averting freezing of the fitting portion between the charging inlet 25 and the charging connector 33 even at low temperatures, and the charging connector 33 can be automatically detached from the charging inlet 25.

Note that when the automatic charging device is used, determining whether the charging connector 33 and the charging inlet 25 are in a fitted state, and sensing of each of whether fitting has started, fitting is complete, detaching has started, and detaching is complete, and so forth, can each also be performed based on the operating state of the arm mechanism, for example, in addition to the methods described above. For example, the point in time at which the arm mechanism starts to perform operations of holding the charging connector 33 and inserting the charging connector 33 into the charging inlet 25 can be sensed as the point in time at which fitting of the charging connector 33 and the charging inlet 25 is started.

## Claims

1. A charging system (1) that is configured to fit a charging connector (33) of a charging device (3) to a charging inlet (25) of a vehicle (2) to charge a battery installed in the vehicle (2), the charging system (1) comprising:
a temperature detecting unit (23) configured to detect a temperature of the charging inlet (25);
a usage-start-time acquisition unit (24) configured to acquire a usage start time at which a user starts using the vehicle (2); and
a control unit (31) configured to, when fitting the charging inlet (25) and the charging connector (33) to charge the battery, execute control, based on a detection result of the temperature detecting unit (23), to perform charging by applying, at a point in time that is immediately prior to the usage start time, a current that is greater than a current applied earlier than the point in time, when the temperature of the charging inlet (25) is lower than a threshold value temperature that is set in advance.

2. The charging system (1) according to claim 1, wherein the control unit (31) increases the current of charging, from start of charging, such that the current is greater a closer to the usage start time, when the temperature of the charging inlet (25) is lower than the threshold value temperature set in advance.

3. The charging system (1) according to claim 1 or 2, wherein a part of the charging connector (33) is made of a high thermal conductivity material.

4. The charging system (1) according to claim 1 or 2, wherein the charging device (3) includes an arm mechanism that holds the charging connector (33), and automatically inserts and removes the charging connector (33) to and from the charging inlet (25).

5. A charging system (1) configured to fit a charging connector (33) of a charging device (3) to a charging inlet (25) of a vehicle to charge a battery installed in the vehicle, the charging system (1) comprising a control unit (31) configured to charge the battery by fitting the charging inlet (25) and the charging connector (33) to each other, wherein the control unit (31) is configured to:
start detaching the charging connector (33) from the charging inlet (25) after charging of the battery is complete; and
when the charging connector (33) cannot be detached from the charging inlet (25), execute control of repeatedly performing discharging in which current flows from the charging inlet (25) side to the charging connector (33) side and charging in which current flows from the charging connector (33) side to the charging inlet (25) side, alternatingly.

6. The charging system (1) according to claim 5, wherein a part of the charging connector (33) is made of a high thermal conductivity material.

7. The charging system (1) according to claim 5, wherein the charging device (3) includes an arm mechanism that holds the charging connector (33), and automatically inserts and removes the charging connector (33) to and from the charging inlet (25).
